Europäisches Patentamt

European Patent Office

Office européen des brevets

(11) Veröffentlichungsnummer: **0 137 094**
**B1**

# (12) EUROPÄISCHE PATENTSCHRIFT

(45) Veröffentlichungstag der Patentschrift:
01.07.87

(51) Int. Cl.⁴: **A 41 B 13/02**, A 62 B 18/02

(21) Anmeldenummer: **84102709.7**

(22) Anmeldetag: **13.03.84**

(54) **Chirurgische Gesichtsmaske.**

(30) Priorität: **12.10.83 DE 3337031**

(43) Veröffentlichungstag der Anmeldung:
**17.04.85 Patentblatt 85/16**

(45) Bekanntmachung des Hinweises auf die Patenterteilung:
**01.07.87 Patentblatt 87/27**

(84) Benannte Vertragsstaaten:
**AT BE CH DE FR GB IT LI LU NL SE**

(56) Entgegenhaltungen:
**EP-A-0 060 687**
**WO-A-81/03266**
**DE-A-2 032 072**
**US-A-2 740 184**

(73) Patentinhaber: **Firma Carl Freudenberg, Höhnerweg 4, D-6940 Weinheim/Bergstrasse (DE)**

(72) Erfinder: **Groitzsch, Dieter, Dr., Hermann- Löns-Strasse 6 A, D-6945 Hirschberg OT Leutershausen (DE)**
Erfinder: **Krull, Manfred, Hüttengasse 49, D-6901 Heiligkreuzsteinach (DE)**

(74) Vertreter: **Weissenfeld- Richters, Helga, Dr., Höhnerweg 2, D-6940 Weinheim/Bergstrasse (DE)**

**Beschreibung**

Die Erfindung betrifft eine chirurgische Gesichtsmaske mit einem Filtermedium aus fasrigen Elektreten, das beidseitig durch Vliesstofflagen abgedeckt ist.

Fasrige Elektrete sind Fasern, die mit einer permanenten Ladung versehen sind. Derartige Fasern sind bekannt und auch deren Verwendung als Filtermedien. Die Filterwirkung hängt zu einem wesentlichen Teil von der Feinheit und der

Dichte der Fasern sowie von der elektrischen Ladung ab, welche bewirkt daß im Inneren des Filtermediums elektrische Felder erzeugt werden, durch die geladene und auch ungeladene Staubteilchen zur Abscheidung an der Faseroberfläche gebracht werden, wo sie durch Haftkräfte festgehalten werden.

Die Herstellung von fasrigen Elektreten wird beispielsweise in EP-A 00 60 687 beschrieben. Die ungeladene Faserschicht wird bei Raumtemperatur mittels Korona-Entladung in ein Elektret überführt. Die fasrigen Elektrete finden Anwendung als Filtermedium für chirurgische Gesichtsmasken. Das Filtermedium wird beidseitig durch Gewebe- oder Vliesstofflagen abgedeckt. Die Abdeckung besteht aus Reyon-Fasern oder dgl.

EP-A 00 60 687 beschreibt auf Seite 12 ein dreischichtiges Material mit ca. 45 g/m² schmelzgesponnenem Polypropylen mit beidseitiger Vliesstoffabdeckung mit einem Gewicht von jeweils 20 g/m². Dieses Material mit einem Gesamtgewicht von ca. 85 g/m² weist vor der Korona-Behandlung, d.h. ungeladen, einen Filterwirkungsgrad F.E.T. von 40,9 % (Beispiel 1) auf und nach der Korona-Behandlung einen F.E.T. von 95,8 % (Beispiel 6). Unter Filterwirkungsgrad F.E.T. wird die Filterwirksamkeit einer wässrigen Dispersion von Latexmikrokapseln verstanden. Die Bakterienfilterwirksamkeit B.F.E., d.h. die Filterwirkssmkeit gegenüber einer bakterienhaltigen Dispersion (EP-A 00 60 687, Seite 10, Zeile 19 ff) wird durch die Koronaentladung von ca. 64 % auf 98 % angehoben. Dieser Wert entspricht den Anforderungen an moderne chirurgische Gesichtsmasken, denn heute wird ein B.F.E.-Wert von mindestens 95 %, in manchen Fällen sogar von mehr als 99 % verlangt.

Die hohe Filterleistung elektrethaltiger Filtermedien beruht darauf, daß sowohl geladene als auch ungeladene Luftpartikel, die in einer solchen Teilchengröße vorliegen, daß sie bei rein mechanischer Filterwirkung das Filtermedium passieren würden, durch den Ladungscharakter der Elektrete festgehalten werden.

Die modernen hochwirksamen, elektrethaltigen Filtermedien für chirurgische Gesichtsmasken weisen den gravierenden Nachteil auf, daß die Filterleistung in Gebrauch nicht konstant bleibt. Die z.T. sehr feinen Mikrofasern können zumindest bei elektrostatisch ersponnenem Filtermaterial durch die Abdeckung hindurchtreten und so in die Atemwege des Maskenträgers gelangen oder Hautirritationen hervorrufen. Es ist weiterhin erwiesen, daß elektrische Ladungen aus dem Filtermedium bei Langzeitgebrauch abfließen. Die bekannten Filterleistungsvergleiche zwischen geladenen und ungeladenen Filtermedien lassen erkennen, daß bei einer Forderung von B.F.E.-Werten zwischen 95 und 99 % nur elektrethaltige Filter verwendet werden können, denn das Gewicht eines ungeladenen, d.h. rein mechanisch filtrierenden Mediums müßte für einen B.F.E.-Wert von mindestens 95 bzw. 99 % derart angehoben werden, daß die Beatembarkeit der Einwegmaske nicht mehr gegeben und die Wirtschaftlichkeit der Fertigung des Filtermediums in nicht mehr vertretbarem Maße verschlechtert werden würde.

Der Erfindung liegt nun die Aufgabe zugrunde, eine chirurgische Gesichtsmaske mit einem Filtermedium aus fasrigen Elektreten zu entwickeln, die einen sehr hohen B.F.E.-Wert aufweist, wobei Werte von mindestens 98 % und möglichst sogar über 99 % angestrebt werden. Im Gegensatz zu den bekannten Gesichtsmasken dieser Art soll jedoch eine konstante Filterleistung auch bei langfristiger Lagerung sichergestellt sein. Es soll weiterhin verhindert werden, daß die feinen Elektretfasern, selbst solche mit Faserquerschnitten unter 1 µm, nicht durch die Abdeckung hindurchdringen. Ferner soll ein einwandfreier Tragekomfort gewährleistet sein. Dieser Tragekomfort ist zwar mit hydrophilen Abdeckungen aus Zellstoff, Zellwolle oder dgl. aufgrund deren hohen Wasserhaushaltes gegeben. Die Verwendung solcher Vliesstoffe hat jedoch den Nachteil, daß Ladungen abfließen und die Filterwirkung vermindern. Vliesstoffe aus Synthesefasern sind zwar gut luftdurchlässig, aber bezüglich anderer Einflußgrößen auf den Tragekomfort verbesserungsbedürftig. Sie verursachen leicht Hautreizungen und sind wegen ihres hydrophoben Charakters unangenehm beim Tragen. Weiterhin lassen Vliesstoffe aus Synthesefasern entsprechend ihrer relativ offenen Struktur Mikrofasern viel leichter durchtreten als Vliesstoffe aus Zellwolle, Zellstoff oder dgl.

Die erfindungsgemäße Aufgabe wird durch die in den Patentansprüchen beschriebene chirurgische Gesichtsmaske gelöst.

Das Filtermedium besteht aus Fasern mit dielektrischen Eigenschaften und einem Faserdurchmesser unter 10 µm. Es ist in vielen Fällen zweckmäßig, Fasern mit Durchmessern von weniger als 1 µm zu verwenden. Das Polymermaterial dieser Mikrofasern ist aus Polypropylen, Polyethylen, Polysulfon, Polycarbonat, Polystyrol, Celluloseacetat oder Polyestern aufgebaut.

Es können grundsätzlich alle Methoden zur Elektretfaserherstellung angewandt werden. Neben dem in EP-A 00 60 687 beschriebenen Verfahren hat sich insbesondere das in DE-PS 20 32 072 beschriebene elektrostatische Spinnverfahren rbewährt. Es wird hier eine Polymerlösung in einem leicht verdampfenden organischen Lösungsmittel elektrostatisch zu einem mikrofasrigen Elektret versprüht. Faserbildung und Ladung der Fasern erfolgen bei dieser Methode gleichzeitig. Die Faserfeinheit kann auf einfache Weise stark variiert werden, wobei Faserfeinheiten mit deutlich unter 1 µm herstellbar sind. Dieses Verfahren insbesondere unter Verwendung von Methylenchlorid-Lösungen ergibt Fasern, die im Zusammenhang mit der erfindungsgemäßen Gesichtsmaske sehr vorteilhaft sind. Es ist hier auch möglich, mehrere Polymere gleichzeitig aus einer Lösung zu versprühen, wobei zwei oder mehrere im gleichen Lösungsmittel lösliche Kunststoffe verwendet werden. Als Verschnittkomponenten sind auch solche Polymere möglich, die für sich allein zu spröde Fasern ergeben würden oder sich generell in verschnittfreier Form nicht elektrostatisch zu Fasern verspinnen lassen würden. Solche in Methylenchlorid löslichen Polymere sind z. B. Polystyrol oder Polyvinylpyrrolidon.

Es lassen sich jedoch auch Verfahren anwenden, bei denen die Elektretbildung durch nachträgliche Korona-Entladung auf erhitztem oder kalten Faserdielektrikum nach vorangegangener Faserbildung erfolgt. In US-PS 27 40 184 und 20 15 253 werden z. B. Verfahren beschrieben, bei denen dem filtrierenden Medium Ladungen wenig unterhalb der Schmelz- bzw. Erweichungstemperatur übertragen werden. Nach US-PS 39 98 916 und 41 78 157 werden beispielsweise Folien aus fibrillierter, mit der Korona-Entladungsmethode in Elektrete überführte Filtermedien beschrieben.

Die an sich bekannten Filtermedien mit dielektrischen Eigenschaften unter Verwendung von Polymeren wie Polyethylen, Polypropylen, Polycarbonaten oder Polyhalogenkohlenwasserstoffen werden nun ebenfalls wie die bekannten chirurgischen Gesichtsmasken mit zwei Vliesstofflagen abgedeckt. Erfindungsgemäß bestehen jedoch eine bzw. beide dieser Abdeckungen aus einem zweischichtigen Vliesstoff oder aus zwei aufeinander angeordneten Vliesstofflagen, die so aufgebaut ist bzw. sind, daß die dem Filtermedium aus Elektreten zugewandte Schicht bzw. Lage aus elektrisch isolierenden synthetischen Fasern besteht und die äußere bzw. dem Träger zugewandte Schicht bzw. Lage mit Bindemitteln verfestigte hydrophile Fasern enthält. Diese Lage kann zwar erforderlichenfalls durch feintitrige Synthesefasern verstärkt sein, jedoch ist der hydrophile Charakter ausschlaggebend. Auf diese Weise wird erreicht, daß auch bei längerem Gebrauch eine konstante hohe Filterleistung gewährleistet ist. Es wird kein Abfluß elektrischer Ladungen aus dem Filtermedium beobachtet und die sehr feinfasrigen Elektrete können nicht nach außen durchdringen. Die erforderliche Abriebfestigkeit auf beiden Seiten ist ebenfalls gegeben. Bei hohem Tragekomfort ist ein leichter Atemdurchtritt (hohe Luftdurchlässigkeit) gegeben.

Der Hüllvliesstoff hat die Aufgabe, die Filterschicht vor mechanischer Beschädigung während der Konfektionierung der Maske und während des Tragens zu schützen. Außerdem wird verhindert, daß aus dem nur lose verfestigten bzw. nicht verfestigten Filtermedium Fasern oder Faserbruchstücke abgelöst werden.

Die mit Bindemittel verfestigte äußere Schicht des Abdeckvliesstoffes besteht aus Zellstoff und/oder Zellwolle oder einem Gemisch aus überwiegend cellulosischen Fasern. Die dem Filterelektretmedium zugewandte Schicht verhindert den Abfluß elektrischer Ladungen aus dem Filtermedium und besteht aus hydrophobem Fasermaterial wie Polyester, Copolyester oder Polypropylen.

Es ist zweckmäßig, den hydrophilen Charakter der äußeren Abdeckschicht aus cellulosischen Fasern und damit deren Saugvermögen durch Zusätze in der Spinnmasse (Viskose) wie Carboxymethylcellulose oder ähnliche Produkte zu erhöhen. Der Faserflor aus cellulosischen Fasern wird mit Bindemitteldispersionen verfestigt, wobei im Falle des zweischichtigen Aufbaus die Hydrophilfaserseite mit Bindemittel angereichert und die Hydrophobfaserseite bindemittelfrei bzw. stark bindemittelverarmt ist. Man erhält so einen Zweischichtenaufbau und es ist möglich, bei einem derartig zweischichtig aufgebauten Vlies nur eine Abdeckschicht zu verwenden.

Es ist weiterhin möglich, anstelle des zweischichtigen Vliesstoffes zwei getrennte Lagen Vliesstoff als Abdeckung einzusetzen, wobei auch hier durch hydrophile Schicht aus cellulosischem bindemittelhaltigem Fasermaterial besteht und die hydrophobe Schicht aus zweckmäßig thermisch gebundenen synthetischen Fasern.

Mindestens eine der Abdeckschichten für das aus Elektreten bestehende Filtermedium muß zweischichtig bzw. aus zwei Lagen aufgebaut sein. Die zweischichtige bzw. zweilagige Schicht ist dem Träger zugewandt, während die der Außenluft zugewandte Schicht auch ein gewöhnlicher einlagiger Vliesstoff sein kann. Bevorzugt wird jedoch auch hier ein zweilagiger bzw. zweischichtiger Aufbau.

Die ein- oder zweischichtigen Abdeckvliesstoffe können in üblicher Weise mit wässrigen Kunststoffdispersionen nach bekannten Imprägniermethoden verfestigt werden. Die wässrigen Kunststoffdispersionen sind aus dielektrischen Polymeren zusammengesetzt. Es ist zweckmäßig, wenn die Polymerdispersionenen keinen oder wenig Emulgatoren enthalten. Die Dispersionen sind so eingestellt, daß nach der Imprägnierung und Trocknung und gegebenenfalls Vernetzung stets ein hydrophober, d.h. wasserabweisender Charakter, resultiert. Die Feststoffteilchen der Kunststoffdispersion bestehen aus Polyacrylsäureestern oder Copolymeren verschiedener Acrylsäureester, aus einem oder mehreren Acrylsäureestern mit Acrylnitril, Styrol, Ethylen, Vinylacetat und/oder N-Methylolacrylamid. Neben den Polyacrylat-Dispersionen sind auch Polyethylenvinylacetate, Polybutadienstyrole und Polybutandienacrylnitril-Dispersionen einsetzbar.

Die Dispersionen enthalten zweckmäßig vernetzbare Gruppen, z. B. N-Methylolgruppen oder Carboxylgruppen. Die Dispersionen dürfen bei der Trocknung bzw. Vernetzung keine toxisch wirkenden Spaltprodukte entwickeln, wie z. B. Formaldehyd, der beim Tragen der chirurgischen Gesichtsmaske zu Hautirritationen führen kann.

Wegen des Einsatzes der Filtermedien in chirurgischen Gesichtsmasken ist es ebenfalls erwünscht, daß weder Vernetzungskatalysatoren noch Vernetzungsmittel verwendet werden.

Der Oberflächenwiderstand der zur Umhüllung des Filtermediums verwendeten zweischichtigen Vliesstoffe muß an der Synthesefaserseite über $10^{12}$ Ohm liegen, d.h. die Trockensubstanz der zur Verfestigung dieser Vliese verwendeten Dispersionen muß ebenfalls einen bestimmten vorgegebenen Oberflächenwiderstand aufweisen, so daß die Oberflächenwiderstände der Vliesstoffschicht insgesamt wenigstens $10^{12}$ Ohm betragen müssen und vorzugsweise über $5 \times 10^{13}$ Ohm liegen. Demgemäß müssen auch die bindemittelfreien Spinnvliese (hydrophober Teil der Abdeckung) vergleichbare Oberflächenwerte aufweisen.

Die Prüfung der dieleketrischen Eigenschaften geeigneter Kunststoffdispersionen zur Verfestigung der Abdeckvliesstoffe für eine chirurgische Gesichtsmaske wird wie folgt durchgeführt:

Ein ca. 40 g/m$^2$ schweres Polypropylenspinnvlies aus feintitrigen Fasern (1,7 bis 2,2 dtex) wird mit der zu testenden auf einen Feststoffgehalt von 40 Gew.% mit Wasser verdünnten wässrigen Kunststoffdispersion vollbadimprägniert. Die Naßaufnahme beträgt jeweils ca. 120 Gew.%. Nach dem Trocknen im Trockenschrank bei 100°C unter mehrfachem Wenden, um Migration zu vermeiden, wird der Durchschlagwiderstand und beidseitig der Oberflächenwiderstand gemessen.

Es sind solche Dispersionen geeignet, deren Oberflächenwiderstände über $10^{12}$ Ohm, vorzugsweise über $5 \times 10^{13}$ Ohm und deren Durchschlagwiderstände über $10^{11}$ Ohm, vorzugsweise über $10^{12}$ Ohm liegen.

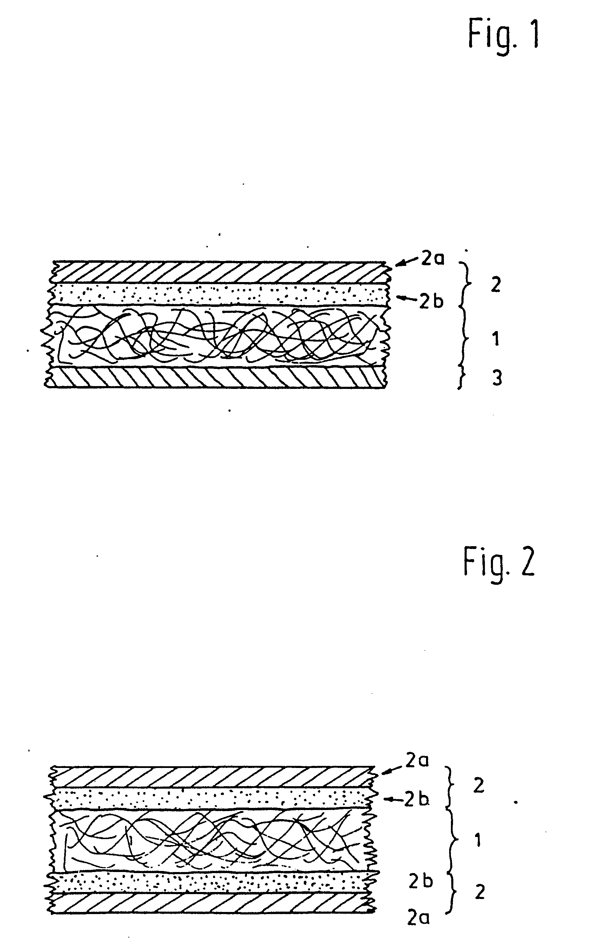

Die Figuren 1 bis 4 zeigen jeweils einen Querschnitt erfindungsgemäß aufgebauter Filtermaterialien für chirurgische Gesichtsmasken.

In Figur 1 ist das mittig angeordnete Filtermedium aus fasrigen Elektreten von den Abdeckvliesstoffen 2 und 3 umgeben. Der Abdeckvliesstoff 3 ist einschichtig und über den ganzen Querschnitt aus dem selben Fasermaterial aufgebaut. Der Abdeckvliesstoff 2 besteht aus den beiden Faserschichten 2a und 2b, wobei die Faserschicht 2b aus hydrophoben Fasern besteht, während die Faserschicht 2a hydrophile Fasern, z. B. Zellwolle und/oder Zellstoff enthält. Der weitaus überwiegende Teil des zur Verfestigung verwendeten Bindemittels ist in der Schicht 2a enthalten und ergibt dort eine sehr glatte und abriebbeständige Oberfläche. Die der Filterschicht 1 zugewandte Hydrophobfaserseite 2b, z. B. aus Polyesterfasern, ist extrem arm an Bindemittel. Die an der Oberfläche enthaltenden Fasern können sich mit der Filterschicht aus Elektreten verhaken, so daß ein Verschieben der Schichten beim Konfektionieren verhindert wird. Die Faserschicht 2b wirkt entsprechend ihres hohen Oberflächenwiderstandes und Durchgangswiderstandes elektrisch isolierend bezüglich der Schichten 1 und 2a.

Figur 2 zeigt ein weiteres Filtermaterial, das im Gegensatz zu Figur 1 auf beiden Seiten des Filtermediums 1 einen zweischichtig aufgebauten Abdeckvliesstoff 2 aufweist. Die Schicht 2b ist wieder hydrophob und dem Filtermedium zugewandt, während die Schicht 2a jeweils aus hydrophilen, mit Bindemittel verfestigten Fasern besteht. Anstelle des zweischichtigen Abdeckvliesstoffes können jeweils auch zwei getrennte Lagen Vliesstoffe 2a und 2b vorgesehen sein, wobei 2b dann ein thermisch gebundener Vliesstoff aus hydrophoben Fasern ist und 2a ein bindemittelhaltiger Vliesstoff aus hydrophilen Fasern.

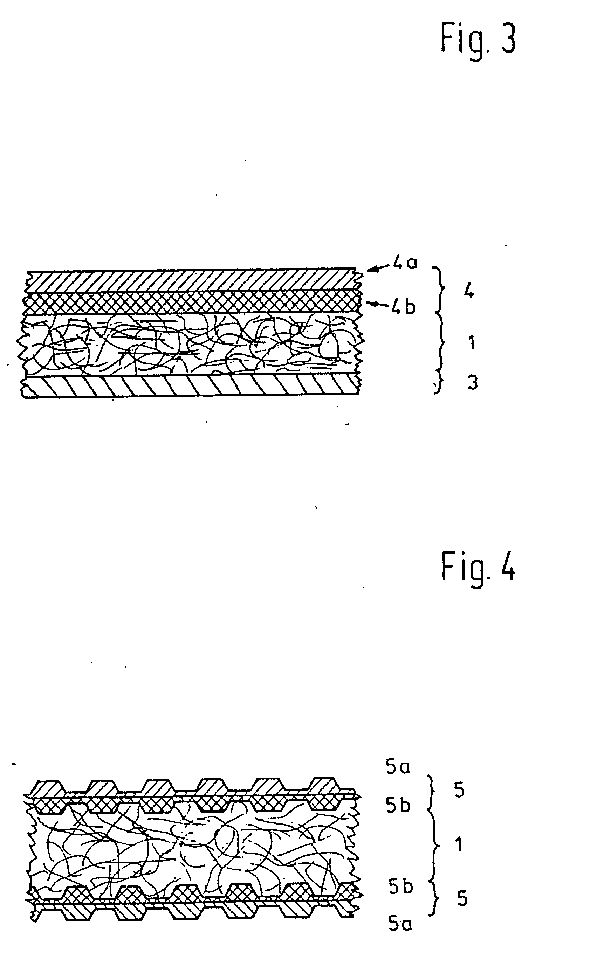

Figur 3 entspricht Figur 1, indem der Abdeckvliesstoff 3 ein einschichtiger Vliesstoff aus cellulosischem Fasermaterial darstellt. Die Doppelschicht 4 besteht aus einem Polypropylenspinnvlies 4b und einem bindemittelgebundenen cellulosischen Faservliesstoff 4a. Das Polypropylenspinnvlies 4b übernimmt die elektrische Sperrfunktion.

Figur 4 zeigt eine Mikroelektretfaserschicht 1, die beidseitig von elektrisch isolierenden Vliesstoffen 5b umhüllt ist. Es sind wiederum hydrophile Vliesstoffe aus cellulosischem Fasermaterial 5a vorgesehen. Die Schichten 5a und 5b sind durch punktförmiges Verschweißen miteinander verbunden.

Das Gewicht der Elektretfaserschicht bewegt sich in der Regel zwischen 10 und 40 g/m$^2$ und ist abhängig von Durchmesser und elektrischer Ladungsdichte der Elektretfilterfasern. Besonders gute Eigenschaften werden mit Elektretfasern erzielt, die aus niedrig siedenden Lösungsmitteln, z. B. Methylenchlorid, nach elektrostatischen Sprühverfahren (z. B. entsprechend DE-PS 20 32 072) erhalten wurden. In 30 g/m$^2$ um einen dauerhaften B.F.E.-Wert von mehr als 98 % zu erreichen, wenn das vorgeschlagene Aufbauprinzip bezüglich der Abdeckvliesstoffe eingehalten wird. Das Gewicht der Abdeckvliesstoffe liegt dann bei einschichtigem Aufbau zwischen 15 und 30 g/m$^3$, bei zweischichtigem Aufbau zwischen 20 und 35 g/m$^2$. Bewährt hat sich ein durchschnittlicher Fasertiter der in den Abdeckvliesstoffen eingesetzten Fasern von unter 1,7 dtex.

Die nachfolgenden Beispiele beschreiben den Aufbau des mehrschichtigen Filtermaterials und dessen Auswirkung auf die Eigenschaften der daraus hergestellten chirurgischen Gesichtsmasken. Beispiel 4 ist ein Vergleichsversuch und beschreibt ein Filtermaterial für chirurgische Gesichtsmasken unter Verwendung des gleichen Filtermediums aus fasrigen Elektreten, wobei jedoch konventionelle Abdeckvliesstoffe eingesetzt sind.

**Beispiel 1**

Es wird ein Aufbau gemäß Figur 2 durchgeführt. Das Elektretmikrofasermedium 1 besteht aus einer Polymermischung aus 93 Gew.% Polycarbonatfasern und 7 Gew.% Polystyrolfasern, die gemeinsam aus einer Lösung der Polymermischung in Methylenchlorid nach dem Verfahren gemäß DE-PS 20 32 072 ersponnen sind. Das Gewicht der Mikrofaserauflage 1 beträgt 20 g/m$^2$.

Beide Abdeckvliesstoffe sind zweischichtig aufgebaut und schaumimprägniert. Die Isolierschicht 2b besteht aus Polyesterfasern und enthält nahezu kein Bindemittel, während die Schicht 2a aus Zellwollfasern aufgebaut ist und den überwiegenden Teil des Bindemittels enthält. Das Gewicht des zweischichtigen Vliesstoffes beträgt 26 g/m$^2$.

Der zweischichtige Abdeckvliesstoff wird dadurch erhalten, indem auf einer Trockenvlieslegeanlage, die aus einer oder mehreren Kremplen mit Querleger und zumindest einer Längskrempel besteht, ein 10,5 g/m² schwerer Querflor aus 100 Gew.% Polyesterfasern (Dacron 54 W, dtex 1,7 mit 38 mm Faserlänge) gelegt wird und darauf ein 7,5 g/m² schwerer Längsflor aus 100 Gew.% Zellwollfasern (dtex 1,7, 40 mm lang). Das zweischichtige Faservlies wird mit einer wäßrigen Bindemitteldispersion und einem Bindemittelauftrag von 8,0 g/m² gebunden. Man erhält so einen Bindemittelanteil von 32 Gew.%, bezogen auf das Gesamtgewicht des Faserflors von 26 g/m². Der Feststoffgehalt der Bindemitteldispersion beträgt 17 Gew.%. Das imprägnierte Vlies wird bei 180°C getrocknet. Hierbei verflüchtigt sich gleichzeitig die zugesetzte Faseravivage.

Der Oberflächenwiderstand und der Durchschlagwiderstand liegen über $10^{12}$ Ohm. Zur Prüfung dieser Widerstände wird ein 40 g/m² schweres bindemittelfreies Polypropylenvlies mit einem durchschnittlichen Titer von ca. 1,7 bis 2,2 dtex mit der für die Imprägnierung vorgesehenen, jedoch auf 40 Gew.% Festgehalt eingestellten Imprägniermischung getränkt. Anschließend wird bei 110°C getrocknet. Die Auftragsmenge an Trockensubstanz des Bindemittels beträgt 35 Gew.%, bezogen auf das Gesamtgewicht des imprägnierten Vliesstoffes. Als Widerstandsmeßgerät dient ein Teraohmmeter Nr. 5890 der Firma Siemens AG für einen Meßbereich von $10^5$ bis $10^{15}$ Ohm bei einer Meßspannung von 10 bzw. 100 Volt. Die Elektrodenanordnung und Meßschaltung entsprechen sowohl für die Messung des elektrischen Oberflächenwiderstandes als auch des Durchschlagwiderstandes dem in Figur 2 bzw. 3 des DIN-Blattes 54 345. Die Anpreßkraft beträgt 10 Newton, was annähernd einem Druck von 0,2 N/cm² entspricht. Es werden die in Tabelle 1 wiedergegebenen Oberflächen bzw. Durchgangswiderstände gemessen:

**Tabelle 1**

| Probe | elektrischer Durchgangswiderstand in Ohm | elektrischer Oberflächenwiderstand in Ohm |
|---|---|---|
| PP-Spinnvlies 40 g/qm Original | $1 \times 10^{13}$ | $9 \times 10^{13}$ |
| PP-Spinnvlies 40 g/qm auf ein F:B = 65:35 imprägniert mit Primal E 1845 | $7 \times 10^{12}$ | $8 \times 10^{13}$ |

Aus dem Vergleich der elektrischen Widerstände zwischen dem unimprägnierten und dem imprägnierten Polypropylenspinnvlies geht hervor, daß die Polyacrylat-Dispersion praktisch keinen Einfluß auf die elektrisch isolierendcn Eigenschaften ausübt.

Die Polyesterseite (hydrophobe Seite) der Abdeckvliesstoffe wurde aus einer 15 Gew.%igen Polymerlösung von 93 Gew.% Polycarbonat und 7 Gew.% Polystyrol, gelöst in Methylenchlorid, zu einem Vlies von 20 g/m² elektrostatisch aufgesprüht. Die Bedingungen der Sprühanlage, wie Leitfähigkeitsbereich, Bandbelegung, angelegte Spannung, relative Luftfeuchtigkeit und Temperatur in der Spinnkammer sowie Viskosität und Leitfähigkeit der Polymerlösung werden so eingestellt, daß ein durchschnittlicher Elektretfaserdurchmesser von 6,6 μm Mit einer Streuung von 3,9 bis 10,6 μm resultiert. Anschließend läßt man zur Abdeckung der Oberseite einen hydrophilen Vliesstoff unter leichtem Anpreßdruck so zulaufen, daß die hydrophobe Polyesterseite der Elektretfaserschicht zugewandt ist.

Filtertechnische Ergebnisse:

Zur Messung der Filterwirksamkeit werden der Paraffinölnebel-Durchlaßgrad, der NaCl-Aerosol-Durchlaßgrad und die Bakerienfiltereffizienz herangezogen.

Das Prüfverfahren mit Paraffinölnebel wird in Anlehnung an DIN 3181, Teil 2 (Atemfilter für Atemschutzgeräte) durchgeführt. Es wird mit einer Luftmenge von 3,6 m³/h, was einer Mediageschwindigkeit von 0,1 m/sec entspricht und einem Betriebsdruck des Kaltverneblers von 0,45 bar gemessen. Der Durchlaßgrad D als Index$_{Öl}$ wird in Prozent angegeben. Die in der nachfolgenden Tabelle 2 aufgeführten Werte sind jeweils Mittelwerte aus vier Einzelmessungen:

5

**Tabelle 2**

| Lagerzeit in Wochen | Druckdifferenz p (Pa) | Paraffinölnebel-Durchlaßgrad $D_{Öl}$ in Prozent |
|---|---|---|
| 0 | 29.3 | 21.2 |
| 1.3 | 29.8 | 39.0 |
| 2.5 | 30.0 | 42.1 |
| 3.6 | 29.3 | 44.1 |
| 4.6 | 30.8 | 46.9 |
| 5.6 | 33.8 | 46.9 |
| 9.3 | 32.0 | 46.2 |
| 12.0 | 31.5 | 43.5 |
| 37.0 | 32.2 | 44.2 |

Der NaCl-Aerosol-Durchlaßgrad wird nach DIN 3182, Teil 2 bestimmt. Die Mediageschwindigkeit beträgt 0,04 m/sec. Die angegebenen Werte sind jeweils Mittelwerte aus drei Einzelmessungen.

**Tabelle 3**

| Lagerzeit in Wochen | Druckdifferenz p (Pa) | NaCl-Durchlaßgrad $D_{NaCl}$ in Prozent |
|---|---|---|
| 0 | 9.6 | 2.21 |
| 6 | 10.7 | 6.12 |
| 18 | 10.7 | 7.36 |
| 30 | 11.3 | 6.98 |
| 45 | 11.0 | 7.13 |
| 50 | 11.3 | 7.32 |

Zur Bestimmung der Filterwirksamkeit gegen Bakterien wird der sogenannte B.F.E. (Bacterial Filter Efficiency) von Mideco, Salt Lake City/Utah, durchgeführt. Nach diesem Test wird ein Aerosol aus Staphylococcus-Aureus-Bakterien durch eine Öffnung geschickt und das Aerosol nach Durchlaufen eines mikroporösen Filters aufgefangen. Anschließend werden Agar-Platten beimpft. Der gleiche Vorgang wird mit dazwischengeschobenem, zu testendem Filtermaterial wiederholt. Nach einer Periode von 24 bis 48 Stunden werden die Bakterienkolonien gezählt und die Werte mit und ohne dazwischengeschaltetem Testmedium verglichen. Die Ergebnisse, ausgedrückt in Prozent B.F.E. geben an, um wieviel Prozent die Zahl der Bakterienkolonien reduziert wird, wenn das zu testende Filtermedium dazwischengeschoben wird. Ein B.F.E. von 98 % bedeutet somit, daß 98 % der Bakterien von dem Testmaterial zurückgehalten und dementsprechend 2 % der Bakterien einer bestimmten Durchschnittsgröße passieren konnten.

Tabelle 4 enthält die Mideco-B.F.E.-Werte, gemittelt aus drei Einzelmessungen in Abhängigkeit von der Lagerzeit. Die relative Luftfeuchtigkeit beträgt 20 bis 23 %, die Temperatur 22 bis 23°C, der Barometerdruck 630 bis 640 mm und die mittlere Partikelgröße der Bakterien 3,0 µm.

**Tabelle 4**

| Lagerzeit Wochen | 2 | 5 | 15 | 30 | 60 |
|---|---|---|---|---|---|
| B.E.F. % | 99.1 | 99.2 | 99.0 | 99.3 | 98.8 |

Sowohl die Durchlaßgrade $D_{Öl}$ als auch die $D_{NaCl}$ steigen zunächst an und haben nach ca. 4 bis 6 Wochen ihren Endstand erreicht. Diese anfängliche Verschlechterung der $D_{Öl}$ und $D_{NaCl}$ hat jedoch überraschenderweise keinerlei Auswirkungen auf den praxisrelevanten B.F.E.-Test. Da es bei einer chirurgischen Gesichtsmaske insbesondere auf diesen B.F.E-Test ankommt ist es wichtig daß dieser Wert gemäß Tabelle 4 innerhalb des Meßzeitraumes von 60 Wochen konstantgeblieben ist.

# 0 137 094

**Beispiel 2**

Es wird wie in Beispiel 1 verfahren mit der Maßgabe, daß der Imprägniermischung zur Verbesserung der Netzeigenschaften 2 Gew.%, bezogen auf das Gewicht des Bindemittels an einem nichtionogenen Netzmittel auf Basis Polyglykoläther zugegeben werden. Die Messungen des elektrischen Widerstandes sowohl am ausgerüsteten Polypropylenspinnvlies als auch an den zweischichtigen Abdeckvliesstoffen ergeben keinerlei erkennbare Unterschiede im Vergleich zu Beispiel 1. Hieraus ergibt sich, daß überraschenderweise Tensidzusätze auf Basis Polyglykoläther in den zur Vernetzung üblichen Konzentrationen bei der Herstellung der Abdeckvliesstoffe verwendet werden können, ohne daß deren elektrischen Eigenschaften negativ beeinflußt werden.

**Beispiel 3**

Es wird ein Aufbau des Filtermaterials gemäß Figur 1 vorgenommen. Das Elektretmikrofasermedium entspricht Beispiel 1. Der zweischichtige Abdeckvliesstoff 2 besteht aus der Polyesterfaserschicht 2b und der Zellwollschicht 2a identisch mit Beispiel 1. Der einschichtige Abdeckvliesstoff 3 besteht aus Zellwolle, die gemäß Beispiel 1 schaumimprägniert ist mit einem Faser-Bindemittelverhältnis von 68:32.

Der einschichtige Abdeckvliesstoff wird aus einem 7,5 $g/m^2$ schweren quergelegten Faserflor aus 100 Gew.% Viskosezellwolle (dtex 1,7, 40 mm Faserlänge) und einem darauf abgelegten Längsflor von 7,5 $g/m^2$ der gleichen Faserart hergestellt. Der insgesamt 15 $g/m^2$ schwere Faserflor wird mit der in Beispiel 1 angegebenen Imprägniermischung schaumimprägniert. Das Faser-Bindemittelverhältnis beträgt 68:32. Es wird ein elektrischer Durchgangswiderstand von $8 \times 10^8$ Ohm ermittelt und ein elektrischer Oberflächenwiderstand auf beiden Seiten von $4 \times 10^9$ Ohm.

Bei der Herstellung der Elektretschicht wird ebenfalls wie in Beispiel 1 vorgegangen. Es werden 20 $g/m^2$ Mikrofasern, bestehend aus 93 Gew.% Polycarbonat und 7 Gew.% Polystyrol aus Methylenchlorid-Lösung elektrostatisch aufgesprüht. Anschließend wird das Filtermedium mit dem zweischichtigen Abdeckvliesstoff 2 mit der hydrophoben Polyesterseite 2b nach innen abgedeckt.

Filtertechnische Daten:

**Tabelle 5**

| Lagerzeit Wochen | Druckdifferenz p in Pa | Ölnebel-Durchlaßgrad $D_{Öl\ 0,1\ m/s}$ in Prozent |
|---|---|---|
| 0 | 31.5 | 18.9 |
| 1.3 | 34.3 | 36.4 |
| 2.5 | 35.0 | 37.7 |
| 3.6 | 31.3 | 37.2 |
| 4.6 | 37.0 | 40.1 |
| 5.6 | 37.3 | 39.1 |
| 9.3 | 37.0 | 43.1 |
| 12.0 | 36.0 | 42.4 |
| 30.0 | 37.2 | 43.2 |

**Tabelle 6**

| Lagerzeit Wochen | Druckdifferenz p in Pa | Kochsalz-Aerosol-Durchlaßgrad $D_{NaCl}$ bei 0.04 m/s in Prozent |
|---|---|---|
| 0 | 12.2 | 1.73 |
| 6 | 13.1 | 4.58 |
| 18 | 13.3 | 6.15 |
| 30 | 13.6 | 6.80 |
| 45 | 14.0 | 7.62 |

**Tabelle 7**

| Lagerzeit Wochen | 2 | 5 | 15 | 30 | 45 |
|---|---|---|---|---|---|
| B.F.E. % | 99.2 | 98.8 | 99.0 | 98.5 | 98.2 |

Es ist erkennbar, daß sich die innerhalb der ersten Wochen verschlechternde Filterleistung $D_{\ddot{O}l}$ nicht in einer Herabsetzung des B.F.E.-Wertes wiederspiegelt. $D_{NaCl}$ ändert sich ebenfalls nur innerhalb der ersten Wochen und bleibt dann konstant.

**Beispiel 4 (Vergleichsversuch)**

Es wird ein konventionell aufgebautes Filtermaterial für chirurgische Gesichtsmasken nachfolgenden Aufbaus hergestellt:

Das Elektretmikrofasermedium 1 entspricht demjenigen des Beispiels 1. Die Abdeckungen 2 sind mit konventionellem Schaum imprägnierte Vliesstoffe aus 100 Gew.% Zellwollfasern mit einem Faser-Bindemittelverhältnis von 68:32.

Zur Herstellung der Abdeckvliesstoffe 2 werden auf einem 7,5 g/m² schweren Querflor aus 100 Gew.% Viskosezellwolle (dtex 1,7, 40 mm Faserlänge) ein ebensoschwerer Längsflor aus den selben Fasern aufgelegt. Das zusammen 15 g/m² schwere Faservlies wird mit der nachfolgend wiedergegebenen Schaummischung imprägniert:

8

|  | Teile fest | Teile flüssig |
|---|---|---|
| Wasser | - | 382.5 |
| Ammoniumchlorid | 1.0 | 1.0 |
| Silastan RN | 2.0 | 2.8 |
| Produkt NB 185 | 1.0 | 2.3 |
| Ammoniak | - | 1.0 |
| Primal HA 8 45 %ig | 100.- | 222.2 |
| G = 17.0 % | 104.0 | 611.8 |

In der o.a. Rezeptur ist Primal HA 8 eine über N-Methylolgruppen selbstvernetzende Polyacrylsäureester-Dispersion mit weichem Film. Die Zusätze Silastan RN und Produkt NB 185 sind anionische Tenside, die zur Schaumerzeugung und Verbesserung der Netzeigenschäften eingesetzt werden.

Der Bindemittelauftrag beträgt jeweils 7 g/m$^2$ und das Faser-Bindemittelverhältnis 15:7 bzw. 68:32.

Der elektrische Oberflächenwiderstand der Abdeckvliesstoffe beträgt 8 bis 9 x 10$^8$ Ohm, der elektrische Durchgangswiderstand beträgt 1 x 10$^8$ Ohm.

Filtertechnische Ergebnisse:

**Tabelle 8**

| Lagerzeit Wochen | 0 | 1 | 2 | 3 | 4.5 | 5.5 | 8 | 15 | 25 | 35 |
|---|---|---|---|---|---|---|---|---|---|---|
| p (Pa) | 27.8 | 29 | 29 | 32 | 36 | 35.5 | 35.0 | 34.0 | 33.3 | 28.0 |
| $D_{Öl 0.1 m/s}$% | 20.2 | 35.8 | 30.0 | 41.2 | 43.0 | 45.4 | 45.2 | 47.0 | 51.3 | 62.0 |

**Tabelle 9**

| Lagerzeit Wochen | 0 | 1 | 3 | 16 | 22 | 29 | 36 | 52 |
|---|---|---|---|---|---|---|---|---|
| p (Pa) | 11.0 | 12.5 | 14.0 | 14.3 | 14.7 | 14.7 | 15.0 | 15.0 |
| $D_{NaCl 0.04 m/s}$% | 1.80 | 3.26 | 3.33 | 15.8 | 37.7 | 55.5 | 62.3 | 65.2 |

**Tabelle 10**

| Lagerzeit (Wochen) | 2 | 6 | 16 | 30 | 44 | 56 |
|---|---|---|---|---|---|---|
| B.F.E % | 99.2 | 98.8 | 97.7 | 90.5 | 86.8 | 86.2 |

Der Vergleichsversuch macht deutlich, daß im Gegensatz zu den Beispielen 1 und 3 die Filterleistung mit zunehmender Lagerzeit sich erheblich verschlechtert. Die Bakterienfiltereffizienz B.F.E. unterscheidet sich bereits nach ca. 23 Wochen. Hier ist ein für eine leistungsfähige chirurgische Gesichtsmaske gerade noch akzeptabler Wert von 95 % B.F.E.-Mideco erreicht. Nach ca. einem Jahr erhält man einen Endwert von ca. 86 % B.F.E. Dieser Wert entspricht beinahe einem Filtermedium, dessen Filterleistung allein auf mechanischer Filtration basiert.

## Patentansprüche

1. Chirurgische Gesichtsmaske mit einem Filtermedium aus fasrigen Elektreten das beidseitig durch Vliesstofflagen abgedeckt ist, dadurch gekennzeichnet, daß wenigstens eine der Abdeckungen zweischichtig oder zweilagig derart aufgebaut ist, daß die dem Filtermedium zugewandte Schicht oder Lage aus elektrisch isolierenden Synthesefasern besteht und die äußere Schicht oder Lage aus hydrophilen, insbesondere cellulosischen Fasern, wobei die Oberflächenwiderstände der Synthesefaserschicht bzw. -schichten jeweils mindestens $10^{12}$ Ohm betragen.

2. Chirurgische Gesichtsmaske nach Anspruch 1, dadurch gekennzeichnet, daß beide Abdeckungen zweischichtig sind und aus bindemittelgebundenen Vliesstoffen bestehen, wobei die dem Filtermedium zugewandte Schicht im wesentlichen bindemittelfrei ist und das Bindemittel im wesentlichen in den äußeren Schichten aus hydrophilen Fasern angereichert ist.

3. Chirurgische Gesichtsmaske nach einem der Ansprüche 1 oder 2, dadurch gekennzeichnet, daß die dem Filtermedium zugewandte hydrophobe Schicht der Abdeckungen aus einer Lage thermisch gebundenen synthetischen Fasern besteht.

4. Chirurgische Gesichtsmaske nach einem der Ansprüche 1 bis 3, dadurch gekennzeichnet, daß die Trockensubstanz der zur Verfestigung der Vliesstoffe eingesetzten Bindemittel einen Oberflächenwiderstand von mindestens $10^{12}$ Ohm und einen Durchgangswiderstand von mindestens $10^{11}$ Ohm aufweist.

5. Chirurgische Gesichtsmaske nach einem der Ansprüche 1 bis 4, dadurch gekennzeichnet, daß wenigstens eine der Abdeckungen aus einem zweischichtigen Vliesstoff besteht, dessen hydrophobe Seite aus Polypropylenfasern mit einem Oberflächenwiderstand von mehr als 5 x $10^{12}$ Ohm und einem Durchgangswiderstand von mehr als $10^{12}$ Ohm besteht.

6. Chirurgische Gesichtsmaske nach einem der Ansprüche 1 bis 5, dadurch gekennzeichnet, daß das Filtermedium aus solchen fasrigen Elektreten besteht, die durch elektrostatisches Verspinnen aus einem flüchtigen Lösungsmittel erhalten sind, wobei gegebenenfalls mehrere Polymere aus einer einzigen Lösung versponnen sind.

7. Chirurgische Gesichtsmaske nach einem der Ansprüche 1 bis 6, dadurch gekennzeichnet, daß die zur Abdeckung vorgesehenen Vliesstoffe bindemittelimprägniert sind und nichtionogene Tenside enthalten.

## Claims

1. A surgeon's face mask with a filter medium composed of fibrous electrets and covered on both sides with layers of nonwoven material, characterized in that at least one of the coverings is formed as a two-layered or two-ply structure such that the layer or ply facing the filter medium consists of electrically insulating synthetic fibres and the outer layer or ply consists of hydrophilic, in particular cellulosic, fibres, the surface resistances of the synthetic fibre layer or layers being in each case at least $10^{12}$ ohm.

2. A surgeon's face mask according to claim 1, characterized in that both the coverings are two-layered and consist of binder-bonded nonwoven materials, the layer facing the filter medium being essentially binder-free and the binder being essentially concentrated in the outer layers of hydrophilic fibres.

3. A surgeon's face mask according to either of claims 1 and 2, characterized in that the hydrophobic layer of the coverings, which faces the filter medium, consists of a ply of thermally bonded synthetic fibres.

4. A surgeon's face mask according to any one of claims 1 to 3, characterized in that the dry substance of the binder used for consolidating the nonwoven materials has a surface resistance of at least $10^{12}$ ohm and a volume resistance of at least $10^{11}$ ohm.

5. A surgeon's face mask according to any one of claims 1 to 4, characterized in that at least one of the coverings consists of a two-layered nonwoven material whose hydrophobic side consists of polypropylene fibres having a surface resistance of more than 5 x $10^{12}$ ohm and a volume resistance of more than $10^{12}$ ohm.

6. A surgeon's face mask according to any one of claims 1 to 5, characterized in that the filter medium consists of fibrous electrets which are obtained by electrostatic spinning from a volatile solvent, optionally a plurality of polymers being spun from a single solution.

7. A surgeon's face mask according to any one of claims 1 to 6, characterized in that the nonwoven materials provided as covering are binder-impregnated and contain nonionic surfactants.

## Revendications

1. Masque facial chirurgical comportant un milieu filtrant constitué d'électrets fibreux et recouvert de part et d'autre par des couches de tissus non tissés, caractérisé en ce qu'au moins un des recouvrements est structuré à couche double ou en deux couches, tandis que la couche tournée vers le milieu filtrant est constituée de fibres synthétiques electriquement isolantes, la couche extérieure étant constituée de fibres hydrophiles, en particulier, cellulosiques, les résistances superficielles de la ou des couches de fibres synthétiques atteignant chaque fois au moins $10^{12}$ ohms.

2. Masque facial chirurgical selon la revendication 1, caractérisé en ce que les deux recouvrements sont à couche double et sont constitués de tissus non tissés liés par un agent liant, la couche tournée vers le milieu filtrant étant essentiellement exempte d'agent liant, tandis que l'agent liant est essentiellement accumulé dans les couches extérieures constituées de fibres hydrophiles.

3. Masque facial chirurgical selon une des revendications 1 ou 2, caractérisé en ce que la couche hydrophobe des recouvrements, qui est tournée vers le milieu filtrant, est constituée d'une couche de fibres synthétiques liées thermiquement.

4. Masque facial chirurgical selon une des revendications 1 à 3, caractérisé en ce que la substance sèche des agents liants utilisés pour consolider les tissus non tissés a une résistance superficielle d'au moins $10^{12}$ ohms et une résistivité spécifique d'au moins $10^{11}$ ohms.

5. Masque facial chirurgical selon une des revendications 1 à 4, caractérisé en ce qu'au moins un des recouvrements est constitué d'un tissu non tissé à couche double dont la face hydrophobe est cosntituée de fibres de polypropylène d'une résistance superficielle de plus de $5 \times 10^{12}$ ohms et d'une résistivité spécifique de plus de $10^{12}$ ohms.

6. Masque facial chirurgical selon une des revendications 1 à 5, caractérisé en ce que le milieu filtrant est constitué d'électrets fibreux que l'on obtient par filage électrostatique à partir d'un solvant volatil, plusieurs polymères étant éventuellement filés à partir d'une seule solution.

7. Masque facial chirurgical selon une des revendications 1 à 6, caractérisé en ce que les tissus non tissés prévus pour le recouvrement sont imprégnés d'un agent liant et contiennent des agents tensio-actifs non ionogènes.

Fig. 1

Fig. 2

Fig. 3

Fig. 4